Europäisches Patentamt

European Patent Office

Office européen des brevets

(11) Publication number: 0 123 519
A1

## EUROPEAN PATENT APPLICATION

(21) Application number: 84302663.4

(22) Date of filing: 19.04.84

(51) Int. Cl.³: F 16 B 37/00

(30) Priority: 23.04.83 GB 8311121

(43) Date of publication of application:
31.10.84 Bulletin 84/44

(84) Designated Contracting States:
BE DE FR IT NL

(71) Applicant: LEMET HARTLAND & EASTWOOD LIMITED
Delta Way, Watling Street
Bridgtown Cannock, Staffs.(GB)

(72) Inventor: Brown, Alan
59, Himley Crescent Goldthorn Park
Wolverhampton West Midlands WV4 5DE(GB)

(74) Representative: Lally, William et al,
FORRESTER & BOEHMERT Widenmayerstrasse 4/l
D-8000 Munchen 22(DE)

(54) Thread forming fastening member.

(57) A thread forming fastening member (10) is provided with
a thread form (14) which is subsequently hardened by a har-
dening process to provide a thread form capable of forming a
complementary thread form on a member with which it is to
engage. The invention relates primarily to a self-tapping nip-
ple for attaching wheel spokes to a wheel part and obviates
the need for spokes provided with a pre-formed thread.

FIG 1

EP 0 123 519 A1

Title: "Thread forming fastening members"

The present invention relates to threaded members of the type capable of forming a thread on another member so as to threadedly engage therewith. Such a member will hereinafter for the sake of convenience only, be referred to as a thread forming member of the type described.

The present invention also relates to a method of making thread forming fastening members of the type described.

Self-tapping screws are known for use with sheet metal, however with such self-tapping screws it is normal to pre-drill the hole and the thread form produced in the sheet metal has a very short length.

It would be desirable to produce a thread forming fastening member of the type described which is capable of forming a thread form on an article to which it is to be secured over a significant length of the article to enable secure engagement between the article and the threaded member of the type described.

In order to manufacture such a member, if it is to be used to engage and form a thread on an article which is relatively hard, i.e. steel, then the member of the type described must itself be made from an even harder material in order to be able to form the thread on the article. If the member of the type described is to be made from a hard material, then the formation of the thread thereon will be a time consuming and hence costly, operation.

Furthermore, it is also possible that the use to which the member of the type described is to be put dictates that it may not be made from a very hard material.

It is an object of the present invention to provide a new or improved thread forming fastening member of the type capable of forming a thread on another member so as to be threadedly engaged therewith.

According to one aspect of the present invention, we provide a thread forming fastening member of the type capable of forming a thread on another member so as to be threadedly engaged therewith characterised in that the surface of the thread formed on said member is harder than the material from which the member is formed.

Preferably said member is subjected, after the thread is formed thereon, to a hardening process. Preferably said hardening process may comprise case hardening and conveniently may comprise a gas carburising process.

Alternatively, said hardening may comprise a nitriding process or any other process enabling at least the surface of said thread form to be significantly harder than the material from which the member is formed.

The member of the type described may have a bore formed therein, the surface of said bore having the thread formed therein.

According to another aspect of the present invention., we provide a method of making a thread forming fastening member capable of forming a thread on another member so as to be threadedly engaged therewith, the method comprising the steps of:-

(a) shaping the member from a desired material;

(b) forming a thread on said member;

(c) subjecting the member to a treatment process resulting in a hardening of at least the surface of said thread form.

Preferably said hardening process comprising case hardening which conveniently may comprise a gas carburising process or nitriding process.

Preferably the material from which the member is formed comprises a mild steel.

The method of the present invention may comprise further treatment processes and conveniently may comprise a stress relief process entailing the controlled heating and cooling of the member subsequent to said hardening process.

The thread forming fastening member of the type described may, subsequent to said hardening process and, when provided said heat treatment process, be plated or otherwise treated to provide a protective and/or aesthetically pleasing appearance.

Preferably the member of the type described may comprise a connecting member adapted to secure in relative fixed relationship two articles, and conveniently may comprise a "nipple" for attaching a wheel spoke to another part of a wheel, for example a rim or a hub.

In the assembly of a spoked wheel, a head end of a spoke is located in a hub, the head abutting the wheel hub, the outer end of the spoke extending towards the rim. A wheel rim is formed with a plurality of through bores through which passes the shank of a headed nipple, the head being radially outermost, of the rim and the shank of the nipple which is provided with a threaded through bore which, in known arrangements, is threadedly engaged with a corresponding thread form provided on the radially outermost end of the spoke.

Since there are many different sizes of spoked wheels, in particular bicycle wheels and motorcycle wheels, a wheel builder is obliged to hold a stock of spokes of many different sizes.

It is a still further object of this invention to provide a method of attaching a spoke to a wheel rim which ameliorates the above mentioned problem.

According to a further aspect of the invention, we provide a method of attaching a spoke to a wheel rim characterised in that the step of locating a headed nipple in a through bore in a wheel rim said headed nipple having a thread form formed in a second bore in a shank part and in that the radially outermost part of said spoke is engaged within said bore and a thread formed on the spoke by engagement with the thread form and relative rotation of said nipple relative to said spoke.

By enabling the nipple to form a thread form on the spoke, each spoke may be cut to the desired length and it is unnecessary for wheel builders to hold a stock of many different sizes of spoke.

It is a still further object of the invention to provide a nipple for attaching a spoke to a wheel rim.

According to a further aspect of the invention, we provide a nipple for attaching a spoke to a wheel rim, said nipple comprising a head portion, a shank portion having a threaded bore therein, at least the surface of said thread being harder than the material from which said nipple is made.

Preferably said nipple comprising a steel material the surface of which is subsequently hardened by a hardening process.

Conveniently said hardening process comprises case hardening and may comprise a gas carburising process, nitriding, or any other satisfactory hardening process.

It is envisaged that a thread forming fastening member of the type described may have a plurality of thread forms formed thereon in order to threadedly engage with a plurality of articles, such members being used to interconnect pipes, rods, tubes or any other suitable article.

Preferably the nipple is provided with two bores, a first bore extending from the end of the shank of the nipple remote from the head and a second bore in which the thread form is provided. the diameter of the first bore is sufficient to permit the end of a spoke to be inserted into the first bore with sufficient clearance for relative rotation between the nipple and the spoke, thus the first bore provides a guide to ensure that the spoke is correctly guided onto the self-tapping thread form provided on the second bore.

Not only does the nipple of the present invention obviate the need for wheel builders to hold a stock of many different sizes of spoke but also, since it is instrumental in providing the thread form on the spoke, once a wheel is built, there will not be portions of each or many of the spokes which expose a thread form and thus provides an irregular surface in which particles of dirt and corrosive substances can accumulate and lead to corrosive damage and hence premature failure of the spoke.

The invention will now be described by way of example only, with reference to the accompanying drawings, wherein:-

FIGURE 1 is a sectional view of a nipple for securing a wheel spoke to a wheel rim;

FIGURE 2 is a partial sectional view of the wheel assembly incorporating the nipple shown in Figure 1.

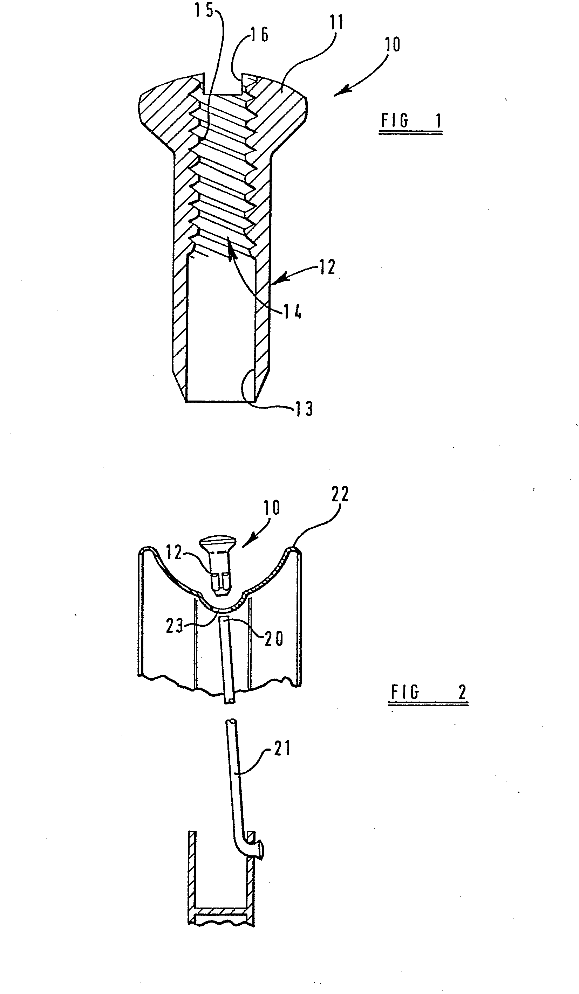

Referring to Figure 1, there is shown a thread forming fastening member of the type described comprising a nipple 10, having a head part 11, a shank part 12, a first bore 13 and a second bore 15 provided with a female thread form 14.

A slot 16 is provided in the head part 11 to enable the member to be rotated by a screwdriver for example.

Referring now to Figure 2, the nipple 10 is shown in a position in which it is about to engage the end 20 of a wheel spoke 21. A wheel rim 22 is provided with a plurality of through bores, one of which is shown at 23, and through which through bore 23 a shank 12 of the nipple 10 passes until the end 20 of spoke 21 is located in first bore 13 and will abut the beginning of thread form 14.

A downwards force is exerted on the nipple 10 and it is rotated and the thread form 14 will form a corresponding thread on the end 20 of the spoke 21.

In use, the nipple 10 will be subjected to considerable strain and it is essential therefore that the nipple 10 is made from a resilient material such as a mild steel so that it can cope with shocks without secumbing to stress related fracture.

Since the nipple 10 must be made from a "soft" material, if the thread form 14 is to be capable of forming a thread on spoke 21, the thread form 14 must be of a hard material.

The spoke 21 should be a fairly hard material, such as a high carbon steel or a stainless steel, thus the problem of producing a nipple 10 of soft material which is capable of forming a thread on spoke 21 is made even more difficult.

The problem is inventively overcome by the process of, after the thread 14 has been formed on the nipple 10, subjecting the nipple to case hardening which conveniently utilises a nitriding process which may produce a case of any desired thickness depending on the size of the nipple 10, the material from which it is formed and the material on which it has to form a thread.

The thread form 14 is formed with a taper to assist in the formation of a corresponding thread in the end 20 of spoke 21 and the thead is preferably formed so as to displace material on the spoke 21 rather than remove material, in order to produce a corresponding thread form on the spoke 21 in which the crest diameter of the thread formed on spoke 21 will be greater than the original spoke diameter.

It is preferred when forming the thread on the spoke 21 to displace the material of the spoke so as to produce a slightly raised thread form. However it is envisaged that a thread which is formed from material which is both displaced and cut, may in certain circumstances be equally satisfactory or even beneficial. It is further envisaged that when forming threads on articles of substantial diameter where there is a substantial thickness of material on which to form the thread, the thread forming process may be a cutting process rather than a displacement process.

The thread form 14 may also be formed with truncated crests which has the dual advantage of:

(a)    being an easier thread form to produce on the nipple itself;

(b)    minimises cutting of the material of the spoke 21.

The method of manufacture of the nipple shown in Figure 1 will now be described in more detail.

The nipple 10 may conveniently be made from mild steel and a particularly suitable material is a free cutting leaded tellurium steel.

Blanks made from the desired material are first formed. The blanks may first be faced to produce a guide face at the ends of the nipple, the first bore 13 may be formed followed by the second bore 14, and slot 16. A tapping operation is then carried out to form the thread 14.

The nipple is then subjected to a case hardening process in which the surface of the nipple is impregnated with carbon by subjecting the nipple to a carbon enriched atmosphere at high temperature, e.g. $650^{0}C$ to $700^{0}C$.

Alternatively, a nitriding process may be carried out.

0123519

It is envisaged that due to the case hardening process, the nipple may be stressed and a controlled heat treatment process may be carried out to eliminate or reduce stress in the nipple.

After the desired controlled heat treatment to reduce stress in the nipple, it may be plated to provide a corrosion resisting surface and also to improve the aesthetic appearance of the nipple, after which a de-embrittling process may be carried out in which the nipple is heated in an inert gas to reduce any adverse effects caused by the plating treatment.

It will be envisaged that before any plating process, any desired cleaning process may be carried out.

The nipple 10 manufactured in accordance with the above mentioned process not only provides a tough and non-brittle member for securing a spoke to a wheel rim capable of absorbing shocks without fracture, but also provides a self-tapping thread form the surface of which is hard and capable of forming a thread on a material harder than that from which the remainder of the nipple is made.

Whereas the invention has been specifically described in relation to the formation of a spoke securing nipple, it is envisaged that the thread forming fastening member of the present invention and the method of manufacture of the present invention has applications to many different fields, and in particular pipe, tube and rod connecting members and methods of manufacture of said members.

Whereas the spoke securing nipple has been shown having a slotted head, by means of which slot it may be rotated by a screwdriver for example to form a thread on the spoke 21, it is envisaged, in particular for use with spoke retaining nipples of large size, that a hexagonal head may be provided which may be engaged by a spanner or socket, or the nipple itself may be formed with a hexagonal socket to be engaged by a key, or any other suitable engagement formation whereby a substantial rotating force may be applied to the nipple to form the thread on the spoke 21.

CLAIMS:

1.    A thread forming fastening member (10) of the type capable of forming a thread on another member so as to be threadedly engaged therewith characterised in that the surface of the thread (14) formed on said member (10) is harder than the material from which the member (10) is formed.

2.    A thread forming fastening member (10) as claimed in Claim 1 characterised in that said member is subjected, after the thread (14) is formed thereon, to a hardening process.

3.    A thread forming fastening member (10) as claimed in any one of the preceding claims characterised in that said member (10) has a bore (15) formed therein and in that at least part of the surface of said bore (15) is provided with said thread form (14).

4.    A thread forming fastening member (10) as claimed in any one of the preceding claims characterised in that said member (10) comprises a nipple for attaching a wheel spoke (21) to another part (22) of a wheel.

5.    A thread forming fastening member as claimed in any one of the preceding claims characterised in that the thread (14) comprises a taper thread.

6.    A thread forming fastening member as claimd in any one of the preceding claims characterised in that said thread form (14) is provided with truncated crests.

7.    A nipple (10) comprising a head part (11) adapted to engage the surface of a wheel part (22), a shank part (12) having a bore (13) therein characterised in that said nipple (10) has a second bore (15) formed therein and in that said second bore (15) is provided with a thread form (14) and in that at least the thread form (14) is harder than the material from which the nipple is formed.

8.    A method of making a thread forming fastening member capable of forming a thread on another member so as to be threadedly engaged therewith, characterised in that the method comprising the steps of:-

(a)    shaping the member (10) from a desired material;

(b)    forming a thread (14) on said member;

(c)    subjecting the member (10) to a treatment process resulting in a
       hardening of at least the surface of said thread form (14).


9.    A method of making a thread forming fastening member as claimed in
Claim 8 characterised in that the method further comprises subjecting the
member (10) to a stress relief process subsequent to said hardening by said
treatment process.


10.    A method of making a nipple for attaching a wheel spoke (21) to a part
(22) of a wheel, characterised in that the method comprises the steps of:-

(a)    forming a nipple having a head part (11), a first bore (13) and a
       second bore (15);

(b)    forming a thread (14) on said second bore (15);

(c)    subjecting the nipple (10) to a treatment process resulting in a
       hardening of at least the surface of said thread form.


11.    A method of attaching a spoke (21) to a wheel rim (22) characterised in
that the step of locating a headed nipple (10) in a through bore (23) in a wheel
rim (22), said headed nipple having a thread form (14) formed in a second bore
(15) in a shank part (12) and in that the radially outermost part (20) of said
spoke (21) is engaged within said bore (13) and a thread formed on the spoke
(21) by engagement with the thread form (14) and relative rotation of said
nipple (10) relative to said spoke (21).

FIG 1

FIG 2

0123519
Application number

European Patent
Office

**EUROPEAN SEARCH REPORT**

EP   84 30 2663

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-U-1 675 985  (E.W.P. MENSCHEL SCHRAUBEN- U. MUTTERNFABRIK)<br>* Claims 1, 2, 4 * | 1,2,5 | F 16 B   37/00 |
| Y | DE-U-1 921 284  (TINNERMAN PRODUCTS)<br>* Page 3, 7th line from bottom of page * | 1,2 | |
| Y | GB-A-1 306 818  (KEYSTONE CONSOLIDATED INDUSTRIES)<br>* Page 1, line 97 * | 1,6 | |
| Y | US-A-3 350 975  (BIEN)<br>* Column 10, line 61 * | 1,2 | |
| Y | US-A-3 545 331  (TINNERMAN)<br>* Column 1, line 19 * | 1,5,6 | TECHNICAL FIELDS SEARCHED (Int. Cl. 3) |
| Y,A | US-A-3 353 581  (EVANS)<br>* Column 3, line 29; figure 3 * | 1,6,8 | B 60 B   1/04<br>F 16 B   37/00 |
| Y | US-A-3 357 293  (HOLTON)<br>* Column 3, line 15; column 4, line 11 * | 1,2 | |
| Y,A | EP-A-0 039 021  (YAMAHA MOTOR CO.)<br>* Figure 5 * | 1,4 | |

The present search report has been drawn up for all claims

| Place of search | Date of completion of the search | Examiner |
|---|---|---|
| BERLIN | 10-07-1984 | ZAPP E |